(19) Europäisches Patentamt / European Patent Office / Office européen des brevets

(11) **EP 2 208 981 B1**

(12) **EUROPEAN PATENT SPECIFICATION**

(45) Date of publication and mention
of the grant of the patent:
**23.03.2016 Bulletin 2016/12**

(51) Int Cl.:
***G01M 13/00*** *(2006.01)*

(21) Application number: **09150567.7**

(22) Date of filing: **14.01.2009**

(54) **Monitoring of rotating machines**

Überwachung rotierender Maschinen

Surveillance de machines rotatives

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**21.07.2010 Bulletin 2010/29**

(73) Proprietor: **Alcatel Lucent
92100 Boulogne-Billancourt (FR)**

(72) Inventor: **Scanlon, Patricia
8, Dublin (IE)**

(74) Representative: **Berthier, Karine
Alcatel-Lucent
148/152, route de la Reine
92100 Boulogne-Billancourt (FR)**

(56) References cited:
**WO-A-2008/117765    US-B1- 6 199 018
US-B1- 6 312 382    US-B1- 7 123 548**

**Description**

This invention relates to monitoring of rotating machines.

Description of the Related Art

Rotating machinery generally comprises several moving parts including one or more rolling element bearings (REBs). The main components of REBs are an inner and outer ring, rolling elements (eg balls) and a cage. Any of these components can fail or can wear with age and ultimately need replacement. Automated machine monitoring processes have been developed for detecting and diagnosing defects as well as for predicting the remaining useful life (RUL) of a machine.

Several different parameters of machine functioning my be monitored. However, the most widely used of these is vibration. As wear occurs or faults happen, the vibration and noise emitted by any of the components of an REB varies and this can monitored. Many different noise or vibration signals, or interactions between them, can be measured and in order to be able to process this efficiently feature extraction must be used, which can select features which are considered the most important and relevant to determine wear of a machine. For example, some changes in noise levels may not be due to wear itself but may be due to changes in temperature or other parameters and automated processes need a method of distinguishing relevant from irrelevant features. This is known as feature extraction.

The relevant features are then applied to a so-called classifier which is used to determine the health, wear level or an idea of RUL of a machine by using a number of classifications. A classifier divides the data it receives into a number of different classes representing gradually increasing stages of wear of the machine from new to old (just prior to absolute failure).

Various feature extraction techniques have been used in the prior art for machine monitoring. Spectral or frequency domain techniques are widely used for feature extraction, to extract a reduced set of relevant features to indicate when any defect develops in an REB. These use techniques such as Fourier Transforms. Amongst frequency domain feature extraction techniques are envelope analysis, short term spectral analysis and modulation spectral feature analysis.

In envelope analysis, a detected noise signal is band passed around a frequency range of interest, rectified and low pass filtered to obtain an envelope signal of a particular defect frequency. Spectral analysis is then performed on this envelope to extract particular features for automated machine monitoring.

Short term spectral analysis considers small portions of the time domain signal to analyse frequency content. In this analysis, the acoustic noise signal is generated into its component frequencies and this is used to determine each type of fault which tends to have its own characteristic spectral signature.

Modulation spectral analysis involves a modulation spectrum which not only contains short term information about a signal but also long term information representing patterns of time variation for the various spectral components. A series of modulation spectral features are obtained.

Using any of the above techniques or others, so-called feature vector dimensionality reduction technique are then used to reduce the number of features (ie different vibration noise signals or combinations thereof which are input into a classifier). 'Dimensionality' represents the number of different features; the greater the possible number of different features then the greater the dimensionality. Typical methods for dimensionality reduction comprise principle component analysis (PCA) and linear discriminant analysis (LDA).

All the above features are well-known in the art. Each technique, however, has certain disadvantages. For example, envelope analysis is currently widely used in machine monitoring but requires specific pre-knowledge of the spectral location of defect frequencies to be analysed. Manual inspection of the signal is required to determine a frequency where the largest difference (in decibels) occurs between signals from machines with defects and machines with no defects. This spectral location is predetermined and is monitored for defect detection or degradation analysis. However, under normal operating conditions it is generally not known which particular defects will develop and whether multiple defects will develop. Thus, relevant information can be unwittingly discarded. Another problem with this approach is choice of width of the frequency band analysed. The band should be wide enough to incorporate all defect locations but too wide a band will incorporate neighbouring noise, particular in lower frequencies where much broadband noise exists, and swamp important information.

A Short Term Fourier Transform (STFT) approach breaks a signal into a set of data subsets with a fixed window width along a time axis and then performs Fourier transforms on each data subset instead of a whole signal set. This maintains temporal location information of each data subset. However, STFT techniques cannot resolve a signal feature when a time interval of the feature is longer than the chosen window width and thus the efficiency of it is limited when a feature interval is unknown.

A modulation spectral feature technique is useful to extract long term features from an acoustic signal across all frequency bands but generates an extremely large number of modulation frequency components which are even too large to be realistically applied to a dimensionality reduction method such as LDA or PCA or as direct input to a classifier. Typically, a modulation spectrogram approach results in feature vectors with the order of hundreds of 100,000's of features.

WO 2008/117765 discloses a method and device for diagnosing abnormalities using a spectral distribution of an acoustic signal.

US 6,312,382 discloses a method and apparatus for extracting cardiac information from an ultrasonic device.

The present invention arose in an attempt to provide improved monitoring systems.

Summary of the Invention

According to the present invention in one aspect, there is provided a method of machine monitoring for real-time detection and/or prediction of faults or performance variations of a machine, comprising detecting acoustic noise emitted by the machine and obtaining a digital signal representative thereof; performing a spectral analysis of the digital signal to obtain modulation spectral features; and characterised by applying a mutual information based feature selection technique to the modulation spectral features to select a sub-set of said modulation spectral features which provide information about performance and/or expected time to failure of the machine.

In some embodiments acoustic noise is digitally sampled over a plurality of overlapping samples of selected duration.

The machines to be analyised may be, for examples, machines with rotating element bearings (REBs), which are mounted to detect and diagnose defects and to predict lifetime. The machines may be fans, or many other types of equipment.

In a further aspect, the invention provides apparatus for monitoring a rotating machine, comprising a transducer for sampling acoustic noise emitted by the machine to obtain sample data; an analogue to digital converter for converting the sample data into a digital form; means for performing spectral analysis on the digital data to obtain spectral modulation features; and characterised by the apparatus including means for performing mutual information based feature selection on the spectral modulation features to select a sub-set features for analysis and monitoring.

The apparatus may further include a novelty detector and a classifier and means for using signals output from the novelty detector and the classifier in data analysis.

Novelty detection, also known as One Class Classification, is described in D.M.J. Tax, One-class classification; Concept-learning in the absence of counter-examples Delft University of Technology. June 2001, ISBN: 90-75691-05-x. Examples of classifiers are Neural Networks, Support Vector Machines or other classifiers.

Up to now, 'off-line' or destruction type techniques have been used to determine expected lifetime or failure prediction times of machines such as fans or other machines having rolling element bearings, so that useful information has been obtained to the effect that, for example, a particular type of fan might be expected, in a particular circumstance, to last for 100,000 hours of use. However, real-time monitoring has only been used for monitoring itself not for prediction. Thus, real-time monitoring has been used to tell operators that a machine has begun to perform badly or has failed so that a technician may be dispatched to that machine to repair or replace it.

The present invention, in a further aspect, comprises the use of real-time monitoring of a machine for the purpose of prediction of lifetime or time to possible failure of that machine. This is made possible by the use of mutual information techniques which, by reducing the subset of features (ie dimensionality) down to a useable level, real-time monitoring to actually be used to predict lifetime, as opposed to simple monitoring a-posteri.

Description of the Drawings

Embodiments of the invention will now be described, by way of example only, with reference to the accompanying schematic drawings, in which:

Figure 1 shows a generalized machine monitoring system;
Figure 2 shows an analysis method;
Figure 3 shows modulation spectral analysis of acoustic signals;
Figure 4 shows plots of normalised feature values against runtime, illustrating a Mutual Information Technique; and
Figure 5 shows a further analysis method.

Detailed Description

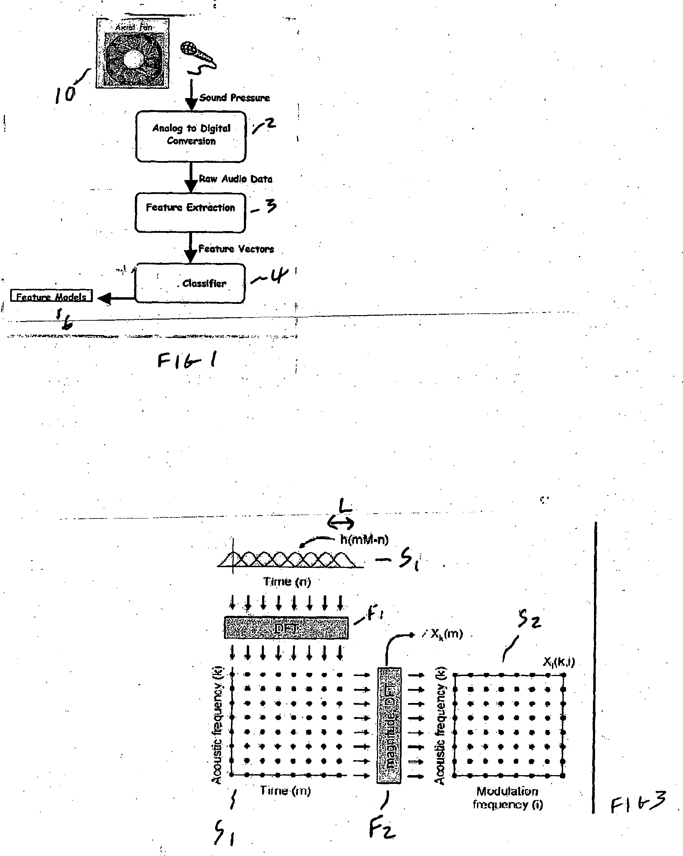

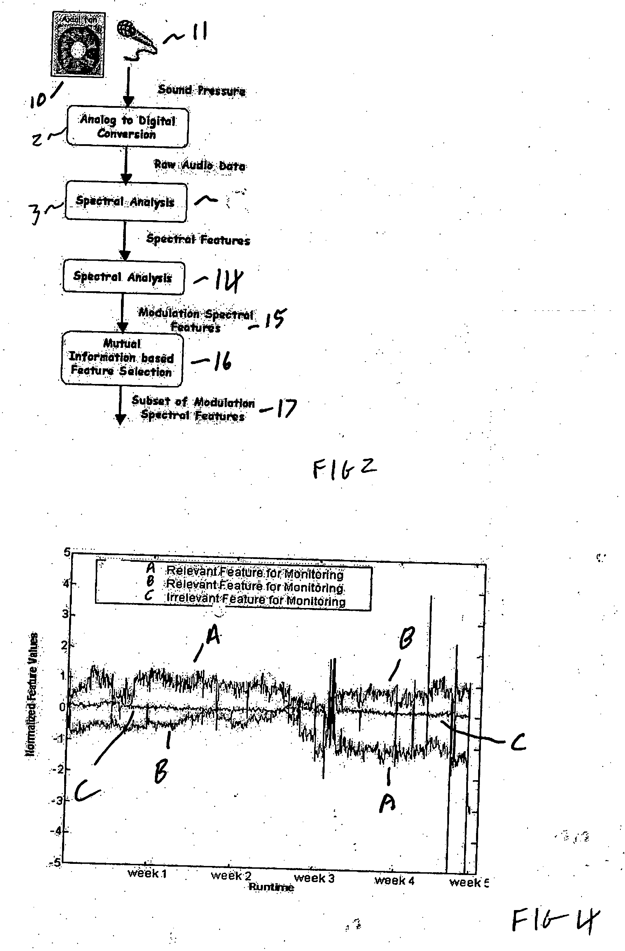

A machine monitoring process is shown schematically in Figure 1 and in slightly more detail in Figure 2. In the generalized process, the noise emitted by a machine, in this case a fan 10, is detected by one or more microphones or microphone array 11 over the lifetime of the machine. The noise levels detected are subject to analogue to digital conversion at an A/D converter 2 and this raw data is subject to feature extraction 3 which obtains a compact (ie reduced) set of feature vectors or representations which are then used to train a classifier 4. The classifier then divides the data into a number of classes (feature models) 6 of increasing stages of wear. However, the precise location in time of the boundaries between these classes is unknown. Only the condition of the machine at the beginning and end of the lifetime are uncertain and the machine is tested over its entire lifetime. In between the beginning and end of its lifetime is a progression of failure.

Figure 2 shows an example of the process in more detail. In this figure, the sound output by the fan is again monitored by the one or more microphones 11 and subject to A/D conversion 2. The raw audio data is then subject to a first spectral analysis 13 and then to a second spectral analysis 14 to generate a set of modulation spectral features 15 (as will be described further below). These are then subject to a mutual information based feature selection 60 to generate a subset 17 of modulation spectral features which are then applied to the classifier 4. The mutual information (MI) feature selection 60 is performed upon the modulation spectral features 15 in order to obtain a subset 17 which is of reduced size and is intended to include only features which are of particular interest for determining RUL and wear of the machine.

Note that the 'features' described above will not usually be specific, physical, features but are instead features in the spectral or frequency domain, ie monitorable transforms or other features which can determine useful information, as is described in more detail below.

In the examples now described, mutual information (MI) feature selection techniques are used to extract modulation spectral features (ie obtain a subset) from a larger set of measured noise levels, for machine monitoring purposes.

A use of mutual information in speech recognition is described in P Scanlon, D Ellis, R Reilly, "Using broad phonetic group experts for improved speech recognition", IEEE Trans on Speech and Audio Processing, Vol 15:3, pp 803-812, 2007. Other reference include en.wikipedia.org/wiki/Mutual_information. Essentially, mutual information of two random variables is a quantity that measures that the mutual dependence of two variables. The above reference describes that the entropy of a random variable is a measure of its unpredictability. Specifically, if a variable $X$ can take on one of a set of discrete values $\{\chi_i\}$ with a probability $\Pr(X = \chi_i)$ then its entropy is given by

$$H(X) = -\sum_{x \in \{x_i\}} \Pr(X = x) \log \Pr(X = x). \qquad (1)$$

If a second random variable $C$ is observed, knowing its value will in general alter the distribution of possible values for $X$ to a conditional distribution $p(\chi|C = c)$.

Because knowing the value of $C$ can, on average, only reduce our uncertainty about $X$, the condition entropy $H(X|C)$ is always less than or equal to the unconditional entropy $H(X)$. The difference between them is a measure of how much knowing $C$ reduces our uncertainty about $X$, and is known as the mutual information between C and $X$

$$I(X\,;\,C) = H(X) - H(X|C) = H(C) - H(C|X). \qquad (2)$$

Note that $I(X; C) = I(C\,; X)$; this symmetry emerges naturally from the expectations being taken over both variables, and leads to the intuitive result that the amount of information that $C$ tells us about $X$ is the same as the amount of information that knowing $X$ would tell us about $C$. Further, $0 \le I(X\,;\,C) \le$ min $\{H(X), H(C)\}$, and $I(X\,;\,C) = 0$, if and only if $X$ and $C$ are independent.

So, two feature sets have mutual information of zero if they are totally independent. If there is any dependence between them, then the mutual information value will non-zero.

Thus, by measuring a number of features using modulation spectral feature extraction (which can lead, as discussed, to a large dimensionality, ie a number of features being identified which would in practice be too large to analyse) and then by applying mutual information (MI) techniques to this set, a subset is obtained which narrows down to feature combinations which are particularly relevant. Thus, if a feature combination or subset determined by mutual information is found to vary over the lifetime of a machine, such as a fan, such that at a particular point an analysis of this feature would be able to tell that a failure of the machine is imminent, or would be able to predict that a failure is likely to occur within a certain time (or is statistically likely to happen within a certain time) then this provides a far greater usefulness and ease of prediction of lifetime of products.

Figure 3 shows a schematic representation of noise from the microphone array ampled during overlapping windows of length L to estimate a (short-term) time-frequency representation of the signal. Then, a Digital Fourier Transform (DFT), F1, is applied along the time dimension of the spectrogram, yielding an estimate of the modulation spectrum S1.

Once a sufficiently large number of these vectors of spectral components has been obtained then modulation spectral components can be extracted. This is done by performing frequency analysis F2, using a second DFT on a set of the spectral components eg the nth component from each vector over x vectors. This produces a set of modulation spectral components S2.

To compute an MI estimate for each candidate feature the class labels of the data are required. However, in the task of machine monitoring, data is acquired over the lifetime of the machine. The data can be divided into gradually increasing stages of wear or classes. However, the location in time of the boundaries between these classes is unknown. Only the condition of the machine at the beginning and end of the lifetime are certain, in between is a progression of failure. To remove any a-priori decisions regarding class boundaries and also take advantage of the fact that there is a chronological order to the collected data samples, classes are defined as the set of short fixed length overlapping time frames over the lifetime of the machine. This approach computes the average local entropy from the entropy of each overlapping time frame over the lifetime and subtracted from the global entropy (over the entire lifetime) to obtain the MI estimate for each feature. The most relevant features are selected based on the highest MI criterion.

The data can be obtained by analysing a set of short fixed length samples and extracting the average modulation spectral feature set. Such a feature set is extracted periodically over the lifetime of the machine eg every 10 minutes. The average local entropy is computed from the entropy of a number of these averaged modulation spectral feature sets sampled around the same day and this is average local entropy is subtracted from the global entropy over the entire lifetime to obtain an MI estimate for each feature. The most relevant features are then selected based on the highest MI criterion.

These features are then used in subsequent monitoring.

In one embodiment, the acoustic noise is sampled every 10 minutes across the entire lifetime, over a 0.1 second time frame of time domain samples and spectral components are generated, then modulation spectral components. Local entropy is measured by taking, for example, about 150 modulation spectral features (sampled every 10 minutes over 1 day) and averaging the entropy to obtain a measurement entropy.

To reduce noise, spectral averaging can be used: A spectral analysis is performed on each 0.1 second time frame of 5000 samples (this being the number in 0.1 second) to obtain an output vector of spectral components, then the result is averaged over 100 of these vectors. An averaged vector, which is averaged over 10 seconds, is obtained. The period of 10 seconds is chosen as it is assumed that virtually no degradation would happen to the monitored machine over 10 seconds so this period is fine to average over. Other time periods, sampling rates, etc may be used.

Figure 4 illustrates three features sampled over the lifetime of a fan. The selected features might correspond to characteristic defect frequencies (CDF) and their corresponding harmonics. However, as it is not possible to know which particular part of bearing started to fail or crack first, or how many cracks occurred, or whether manufacturing tolerances were involved, it is not possible to map the selected features to a physical cause of CDF and harmonics.

The figure shows a plot of normalised feature values against run time, measured in weeks. It is seen that feature A starts at a relatively high normalised value and then, as the fan wears, reduces. Feature B starts at a relatively low value and increases. Feature C remains substantially constant throughout the lifetime. Thus, in this case, features A and B can be said to have high MI and these features provide relevant and important information about the progression of wear of the lifetime of the fan. The feature C has low MI (being relatively invariant in this case) and therefore does not vary significantly over the lifetime of the fan. This feature does not provide useful information for machine monitoring. Thus, in this case, by using MI the features A and B can be concentrated on whilst feature C can be disregarded.

Once a set of features have been chosen, these features can then be used when monitoring machines, to determine RUL, wear or other parameters.

Using MI as a means of optimizing the selection of features as input to the classifier provides an approach that considers each feature individually. Therefore, this approach selects the relevant features from as large a pool of candidate features as necessary. This approach removes any possible error caused by making assumptions, as the relevant features are determined using MI. As a result the selected features may incorporate relevant features from a number of different frequencies and modulation frequency bands, for improved machine monitoring performance. As modulation spectral feature extraction results in irrelevant, noisy parts of the spectrum being included in the feature vector, the MI approach to feature subset selection removes the noisy features and select a reduced, small set of relevant features for classification. This approach does not require a-priori information regarding the spectral location of potential defects and therefore removes the error associated with such a-priori decisions.

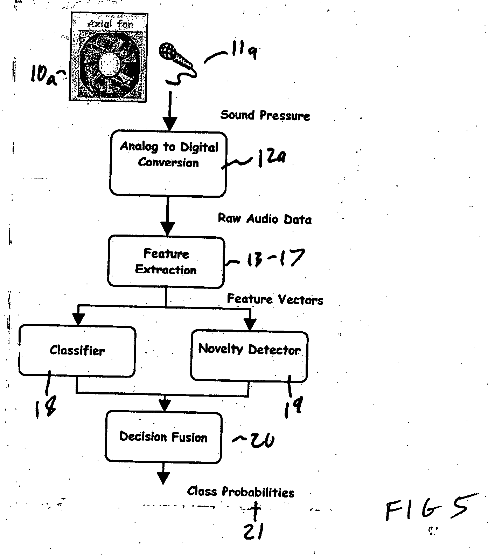

A further embodiment, to further increase the robustness of the machine monitoring system is shown in Figure 5. This involves a combined approach to classification that takes input not only from the classifier but also from a novelty detector. Novelty detection is the identification of new or unknown data or signals that a machine learning system is not aware of during training.

The classifier attempts to discriminate between different 'wear states' or classes and classifies the state of the machine accordingly. The novelty detector takes a slightly different approach in that it learns the 'normal' state of the machine when the machine is new and determines once the acoustic signature has sufficiently deviated from this 'normal' state. In this way the confidence of the decision from the classifier is further increased by confirmation from the novelty detector. The decisions are in effect combined. For example if the classifier determines that the machine is still relatively new it would expect that the acoustic signature has not deviated largely from the normal state or similarly if the classifier deems the machine close to failure it would expect the novelty detector to show large deviations from the normal state. Confidence measures may be extracted from both the classifier and the novelty detector to weight accordingly the combined decisions. For example, if the classifier or novelty detector does not have a high degree of confidence, its decision is weighted lower, etc.

Referring more specifically to Figure 5, the noise from the fan 10a is detected by transducer 11a and subject to A/D conversion 12a. Feature extraction is done as before using spectral analysis and preferably MI. The features are then applied to a classifier 18 and a novelty detector 19. Both of these are well known in their own right. A decision is then made which is based upon the results from the classifier 18 and novelty detector 19, at a decision fusion element 20, to determine class probabilities.

It will be seen that preferred embodiments of the invention use an information-theoretic approach to feature selection to select the modulation spectral features relevant to the task of machine monitoring. A preferred feature selection approach extracts only the relevant spectral and modulation spectral features from the feature set and removes noisy features. Furthermore, the technique does not utilize a-priori decisions regarding class label boundaries, does not utilize a -priori decisions as to the spectral location of developing defects, exploits the chronological order of the data sampled over the lifetime of the machine and can be applied to an extremely large pool of candidate features.

An approach to machine monitoring which combines both classification and novelty detection is also proposed to further increase the robustness of the system by combining confidence measures as well as decision types in the final output.

## Claims

1. A method of machine monitoring for real-time detection and/or prediction of faults or performance variations of a machine, comprising
   detecting (11) acoustic noise emitted by the machine and obtaining a digital signal representative thereof (2);
   performing a spectral analysis of the digital signal (14) to obtain modulation spectral features; and
   **characterised by**
   applying a mutual information based feature selection technique (16) to the modulation spectral features to select a sub-set of said modulation spectral features which provide information about performance and/or expected time to failure of the machine.

2. A method as claimed in Claim 1, including
   performing a first spectral analysis (3) to extract a first set of spectral features,
   then performing a second spectral analysis (14) on the first set, to extract a set of modulation spectral features,
   then performing the step of applying a mutual information based feature selection technique.

3. A method as claimed in Claim 1 or 2, wherein the step of performing a spectral analysis comprises performing a Fourier analysis.

4. A method as claimed in any preceding claim, wherein the step of detecting acoustic noise includes sampling the acoustic noise emitted by the machine over a plurality of overlapping time windows (L) of selected duration.

5. A method as claimed in any preceding claim, wherein the machine includes one or more rotating element bearings.

6. A method as claimed in any preceding claim, wherein the step of detecting acoustic noise includes using a transducer (11) to detect noise emissions by the machine.

7. A method as claimed in any preceding claim, wherein the step of applying a mutual information feature selection technique includes selecting feature combinations or sub-sets which are found to vary over the lifetime of a machine.

8. A method as claimed in any preceding claim, including predicting the lifetime of a fan depending upon results of the machine monitoring.

9. A method as claimed in any preceding claim, wherein the step of detecting includes sampling the acoustic noise over a time duration of time domain samples to obtain a time-frequency representation, the method further comprising generating spectral components from the time-frequency representation then performing frequency analysis on a set of these spectral components to obtain modulation spectral components.

10. A method as claimed in Claim 9, wherein acoustic noise is sampled over a 0.1 second time frame every 10 minutes.

11. A method as claimed in any preceding claim, wherein the step of detecting includes collecting measurements of the acoustic noise emitted by the machine during a plurality of fixed length overlapping time frames (L), the method further comprising computing an average local entropy from entropies of the modulation spectral features for the overlapping time frames and subtracting the average local entropy from a global entropy over a same period of time to obtain a mutual information estimate for each feature.

12. A method as claimed in any preceding claim, further including a novelty detection step (19), a classifer step (18), and a step (20) which combines data from the novelty detection and classifier steps to obtain performance information.

13. Apparatus for monitoring a rotating machine, comprising
a transducer (11) configured to sample acoustic noise emitted by the machine to obtain sample data;
an analogue to digital converter (2) configured to convert the sample data into a digital form;
means configured to perform spectral analysis on the digital data (14) to obtain spectral modulation features; and
**characterised by**
the apparatus including means configured to perform mutual information based feature selection (16) on the spectral modulation features to select a sub-set features for analysis and monitoring.

14. Apparatus as claimed in Claim 13, wherein the apparatus for spectral analysis comprises
means configured to conduct a first spectral analysis (7) on the digital data from the A/D converter and
means configured to conduct a second spectral analysis (14) on a result of the first spectral analysis to select a set of modulation spectral features.

15. Apparatus as claimed in Claim 13 or 14, further including
a novelty detector (19); a classifier (18); and
a means configured to use signals output from the novelty detector and the classifier in data analysis.

**Patentansprüche**

1. Verfahren zur Geräteüberwachung für das Feststellen und Vorhersagen von Fehlern oder Leistungsschwankungen eines Geräts in Echtzeit, umfassend:

das Feststellen (11) akustischen Rauschens, das von dem Gerät ausgesandt wird, und die Gewinnung eines dieses Rauschen repräsentierenden, digitalen Signals (2);
die Durchführung einer Spektralanalyse des digitalen Signals (14), um Modulations-Spektraleigenschaften zu erhalten; und
**gekennzeichnet durch**
die Anwendung einer auf gegenseitigen Informationen basierenden Eigenschaften-Auswahltechnik (16) auf die Modulations-Spektraleigenschaften zwecks Erhalts von Informationen über Leistung oder voraussichtliche Zeit bis zum Ausfall des Geräts.

2. Das Verfahren nach Anspruch 1, umfassend:

die Durchführung einer ersten Spektralanalyse (3) zum Extrahieren eines ersten Satzes von Spektraleigenschaften,
danach die Durchführung einer zweiten Spektralanalyse (14) des ersten Satzes, zum Extrahieren eines Satzes von Modulations-Spektraleigenschaften,
danach die Durchführung des Schritts der Anwendung einer auf gegenseitigen Informationen basierenden Eigenschaften-Auswahltechnik.

3. Verfahren nach Anspruch 1 oder 2, wobei der Schritt des Durchführens einer Spektralanalyse die Durchführung einer Fourier-Analyse umfasst.

4. Verfahren nach einem jeglichen der vorangehenden Ansprüche, wobei der Schritt des Feststellens von akustischem Rauschen das Abtasten des von dem Gerät abgegebenen akustischen Rauschens über eine Vielzahl überlappender Zeitfenster (L) von ausgewählter Dauer hinweg umfasst.

5. Verfahren nach einem jeglichen der vorangehenden Ansprüche, wobei das Gerät ein oder mehrere Lager für rotierende Elemente umfasst.

6. Verfahren nach einem jeglichen der vorangehenden Ansprüche, wobei der Schritt des Feststellens von akustischem Rauschen die Verwendung eines Transducers (11) zum Feststellen von Geräuschemissionen des Geräts umfasst.

7. Verfahren nach einem jeglichen der vorangehenden Ansprüche, wobei der Schritt des Anwendens einer auf gegenseitigen Informationen basierenden Eigenschaften-Auswahltechnik das Auswählen von Eigenschaftenkombinationen oder Unter-Sätzen umfasst, von welchen bestimmt wird, dass sie über die Lebensdauer eines Geräts hinweg variieren.

8. Verfahren nach einem jeglichen der vorangehenden Ansprüche, die Vorhersage der Lebensdauer eines Gebläses auf der Grundlage der Geräteüberwachung umfassend.

9. Verfahren nach einem jeglichen der vorangehenden Ansprüche, wobei der Schritt des Feststellens das Abtasten des akustischen Rauschens über einen Zeitraum von Zeitbereichsproben zwecks Erhalts einer Zeitbereichsdarstellung umfasst, wobei das Verfahren weiterhin das Generieren spektraler Komponenten auf der Grundlage der Zeitfrequenzdarstellung umfasst, dann eine Frequenzanalyse eines Satzes dieser Spektralkomponenten durchführend, um Modulations-Spektralkomponenten zu erhalten.

10. Verfahren nach Anspruch 9, wobei das akustische Rauschen alle 10 Minuten über einen 0,1 betragenden, zweiten Zeitrahmen abgetastet wird.

11. Verfahren nach einem jeglichen der vorangehenden Ansprüche, wobei der Schritt des Feststellens das Sammeln von Messungen des von dem Gerät während einer Vielzahl überlappender Zeitrahmen (L) fester Länge abgegebenen akustischen Rauschens umfasst, wobei das Verfahren weiterhin das Berechnen einer durchschnittlichen lokalen Entropie von Entropien aus den Modulations-Spektraleigenschaften für überlappende Zeitrahmen sowie das Subtrahieren der durchschnittlichen lokalen Entropie von einer globalen Entropie im selben Zeitraum umfasst, um für jede Eigenschaft eine Abschätzung gegenseitiger Informationen zu erhalten.

12. Verfahren nach einem jeglichen der vorangehenden Ansprüche, weiterhin umfassend: einen Neuheitsdetektionsschritt (19), einen Klassifizierschritt (18) und einen Schritt (20) des Kombinierens von Daten aus dem Neuheitsdetektions- und dem Klassifizierschritt zum Zweck des Erhalts von Leistungsinformationen.

13. Vorrichtung für das Überwachen eines rotierenden Geräts, umfassend:

   einen Transducer (11), der konfiguriert ist für das Abtasten des von dem Gerät abgegebenen, akustischen Rauschens zum Zweck des Erhalts von Abtastdaten;
   einen Analog-Digital-Wandler (2), der konfiguriert ist für das Umwandeln von Abtastdaten in ein digitales Format;
   Mittel, die konfiguriert sind für das Durchführen von Spektralanalysen der digitalen Daten (14), um Modulations-Spektraleigenschaften zu erhalten; und
   **dadurch gekennzeichnet, dass**

   die Vorrichtung Mittel umfasst, die konfiguriert sind für die Anwendung einer auf gegenseitigen Informationen basierenden Eigenschaften-Auswahltechnik (16) auf die Modulations-Spektraleigenschaften zum Zweck des Auswählens eines Unter-Satzes von Eigenschaften für Analyse und Überwachung.

14. Vorrichtung nach Anspruch 13, wobei die Vorrichtung für Spektralanalysen umfasst:

   Mittel, die konfiguriert sind für die Durchführung einer ersten Spektralanalyse (7) der digitalen Daten aus dem A/D-Wandler und
   Mittel, die konfiguriert sind für die Durchführung einer zweiten Spektralanalyse (14) des Ergebnisses der ersten Spektralanalyse zum Zweck der Auswahl eines Satzes von Modulations-Spektraleigenschaften.

**15.** Vorrichtung nach Anspruch 13 oder 14, weiterhin umfassend:

einen Neuheitsdetektor (19); einen Klassifizierer (18); und
ein Mittel, das konfiguriert ist für die Benutzung einer Signalausgabe des Neuheitsdetektors und des Klassifizierers bei der Datenanalyse.

**Revendications**

**1.** Procédé de surveillance de machine pour la détection en temps réel et/ou la prédiction de défaillances ou de variations de performances d'une machine, comprenant les étapes suivantes :

détecter (11) le bruit acoustique émis par la machine et obtenir un signal numérique qui le représente (2) ;
effectuer une analyse spectrale du signal numérique (14) pour obtenir des caractéristiques spectrales de modulation ; et
**caractérisé par**
l'application d'une technique de sélection de caractéristiques basée sur des informations mutuelles (16) aux caractéristiques spectrales de modulation pour sélectionner un sous-ensemble desdites caractéristiques spectrales de modulation, afin de fournir des informations au sujet des performances et/ou du temps avant défaillance attendu de la machine.

**2.** Procédé selon la revendication 1, comprenant les étapes suivantes :

effectuer une première analyse spectrale (3) pour extraire un premier ensemble de caractéristiques spectrales, puis effectuer une deuxième analyse spectrale (14) sur le premier ensemble, pour extraire un ensemble de caractéristiques spectrales de modulation,
puis effectuer l'étape d'application d'une technique de sélection de caractéristiques basée sur des informations mutuelles.

**3.** Procédé selon la revendication 1 ou 2, dans lequel l'étape d'exécution d'une analyse spectrale consiste à effectuer une analyse de Fourier.

**4.** Procédé selon l'une quelconque des revendications précédentes, dans lequel l'étape de détection de bruit acoustique comprend l'échantillonnage du bruit acoustique émis par la machine sur une pluralité de fenêtres de temps en chevauchement (L) de durée sélectionnée.

**5.** Procédé selon l'une quelconque des revendications précédentes, dans lequel la machine comprend un ou plusieurs paliers d'éléments tournants.

**6.** Procédé selon l'une quelconque des revendications précédentes, dans lequel l'étape de détection de bruit acoustique comprend l'utilisation d'un transducteur (11) pour détecter les émissions de bruit provenant de la machine.

**7.** Procédé selon l'une quelconque des revendications précédentes, dans lequel l'étape d'application d'une technique de sélection de caractéristiques basée sur des informations mutuelles comprend la sélection de combinaisons ou de sous-ensembles de caractéristiques dont on a observé qu'ils variaient au cours de la durée de vie d'une machine.

**8.** Procédé selon l'une quelconque des revendications précédentes, comprenant la prédiction de la durée de vie d'un ventilateur d'après les résultats de la surveillance de machine.

**9.** Procédé selon l'une quelconque des revendications précédentes, dans lequel l'étape de détection comprend l'échantillonnage du bruit acoustique sur une durée temporelle d'échantillons de domaine temporel pour obtenir une représentation temps-fréquence, le procédé comprenant en outre la génération de composantes spectrales à partir de la représentation temps-fréquence, puis l'exécution d'une analyse fréquentielle sur un ensemble de ces composantes spectrales pour obtenir des composantes spectrales de modulation.

**10.** Procédé selon la revendication 9, dans lequel le bruit acoustique est échantillonné sur un intervalle de temps de 0,1 seconde toutes les 10 minutes.

**11.** Procédé selon l'une quelconque des revendications précédentes, dans lequel l'étape de détection comprend la collecte de mesures du bruit acoustique émis par la machine durant une pluralité d'intervalles de temps en chevauchement (L) de longueur fixe, le procédé comprenant également le calcul d'une entropie locale moyenne à partir des entropies des caractéristiques spectrales de modulation pour les intervalles de temps en chevauchement et la soustraction de l'entropie locale moyenne d'une entropie globale sur une même période de temps pour obtenir une estimation d'informations mutuelles pour chaque caractéristique.

**12.** Procédé selon l'une quelconque des revendications précédentes, comprenant également une étape de détection de nouveauté (19), une étape de classification (18),
et une étape (20) qui combine les données issues de l'étape de détection de nouveauté et de l'étape de classification pour obtenir des informations de performances.

**13.** Appareil pour la surveillance d'une machine tournante, comprenant
un transducteur (11) configuré pour échantillonner le bruit acoustique émis par la machine pour obtenir des données d'échantillons ;
un convertisseur analogique-numérique (2) configuré pour convertir les données d'échantillons en une forme numérique ;
des moyens configurés pour effectuer une analyse spectrale sur les données numériques (14) pour obtenir des caractéristiques de modulation spectrale ; et **caractérisé en ce que**
l'appareil comprend des moyens configurés pour effectuer une sélection de caractéristiques basée sur des informations mutuelles (16) sur les caractéristiques de modulation spectrale pour sélectionner un sous-ensemble de caractéristiques pour l'analyse et la surveillance.

**14.** Appareil selon la revendication 13, dans lequel l'appareil pour analyse spectrale comprend
des moyens configurés pour effectuer une première analyse spectrale (7) sur les données numériques issues du convertisseur A/N et
des moyens configurés pour effectuer une deuxième analyse spectrale (14) sur un résultat de la première analyse spectrale pour sélectionner un ensemble de caractéristiques spectrales de modulation.

**15.** Appareil selon la revendication 13 ou 14, comprenant également
un détecteur de nouveauté (19) ; un classificateur (18) ; et
des moyens configurés pour utiliser les signaux émis par le détecteur de nouveauté et le classificateur dans l'analyse de données.

Sound Pressure

Analog to Digital Conversion $\quad$ 2

Raw Audio Data

Feature Extraction $\quad$ 3

Feature Vectors

Classifier $\quad$ 4

Feature Models

6

FIG 1

$h(mM-n)$ $\quad$ 5₁

Time (n)

DFT $\quad$ F₁

Acoustic frequency (k)

Time (m)

5₁

magnitude DFT $\quad$ F₂

$X_k(m)$

Acoustic frequency (k)

$X_i(k,i)$

5₂

Modulation frequency (i)

FIG 3

EP 2 208 981 B1

FIG 2

FIG 4

12

Axial fan

10a

11a

Sound Pressure

Analog to Digital Conversion — 12a

Raw Audio Data

Feature Extraction — 13-17

Feature Vectors

Classifier

Novelty Detector

18

19

Decision Fusion — 20

Class Probabilities

21

FIG 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008117765 A

- US 6312382 B

**Non-patent literature cited in the description**

- One-class classification. **D.M.J. TAX.** Concept-learning in the absence of counter-examples. Delft University of Technology, June 2001

- **P SCANLON ; D ELLIS ; R REILLY.** Using broad phonetic group experts for improved speech recognition. *IEEE Trans on Speech and Audio Processing,* 2007, vol. 15 (3), 803-812